# EUROPEAN PATENT SPECIFICATION

(11) **EP 2 109 559 B1**
(45) Date of publication and mention of the grant of the patent: **14.08.2013**
(21) Application number: 08705338.5
(22) Date of filing: 22.01.2008
(51) Int. Cl.: B60T 10/00, B60K 31/04, B60W 30/14, B60W 40/06

(54) **BRAKE CONTROL ARRANGEMENT AND METHOD FOR CONTROLLING THE REFERENCE SPEED THEREOF**
BREMSSTEUERANORDNUNG UND VERFAHREN ZUR STEUERUNG DER BEZUGSGESCHWINDIGKEIT DAVON
DISPOSITIF DE COMMANDE DE FREIN ET PROCÉDÉ DE CONTRÔLE DE LA VITESSE DE RÉFÉRENCE DU DISPOSITIF

(30) Priority: 30.01.2007 SE 0700208
(43) Date of publication of application: 21.10.2009
(73) Proprietor: Scania CV Aktiebolag (publ), 151 87 Södertälje (SE)
(72) Inventor: RICKMAN, Johnny, S-151 71 Södertälje (SE); WINGREN, Anna, S-151 38 Södertälje (SE); WICKSTRÖM, Samuel, 151 71 Södertälje (SE)
(74) Representative: Sjögren Paulsson, Stina
(86) International application number: PCT/SE2008/050066
(87) International publication number: WO 2008/094113

(56) References cited:
- EP-A1- 0 046 019
- EP-A2- 1 013 521
- EP-A2- 1 013 521
- US-A- 5 944 766
- US-B1- 6 374 173

## Description

### TECHNICAL FIELD

The present invention relates to a brake control arrangement for a motor vehicle according to the preamble of claim 5. The invention also relates to a method for controlling the reference speed of such a brake control arrangement. Furthermore, the invention relates to a computer program comprising computer program code for implementing a method according to the invention, a computer program product comprising a data storage medium readable by an electronic control unit and having said computer program stored thereon, and an electronic control unit.

### BACKGROUND ART

Heavy motor vehicles, such as lorries, towing vehicles and buses, are often provided with a brake control arrangement which can be enabled by the driver of the vehicle in order to automatically control one or several brakes of the vehicle so as to restrict the speed of the vehicle when the vehicle descends a downhill slope. A target speed for the brake control arrangement is settable by the driver. In this description and the subsequent claims, this target speed for the brake control arrangement is referred to as "reference speed". In dependence on information as to the set reference speed and the actual speed of the vehicle, the brake control arrangement will endeavour to restrict the speed of the vehicle to the reference speed. Such a brake control arrangement is normally adapted to control one or several auxiliary brakes of the vehicle. An auxiliary brake is a supplement to the ordinary wheel brakes of the vehicle and is configured to produce a retarding torque for decreasing the rotational speed of the engine crankshaft. An auxiliary brake may for instance be an engine brake, an exhaust brake, an electromagnetic retarder or a hydraulic retarder. The auxiliary brakes are with advantage used for constant speed keeping purposes in downhill slopes and for moderate decelerations, whereas the vehicle's ordinary wheel brakes are mainly used for powerful and sudden braking operations. With the use of auxiliary brakes, the ordinary wheel brakes, which normally constitute friction brakes of disc brake or drum brake type, are prevented from overheating with the associated risk of brake failure and the wear thereof is reduced.

### PRIOR ART ACCORDING TO RULE 42(1)(b) EPC

Brake control arrangements of the above-mentioned type are for instance known from EP 0 336 913 A2 and EP 0 826 933 A1.

US 5 634 446 A discloses a cruise control system provided with brake control means which controls auxiliary brakes of a vehicle in order to restrict the speed of the vehicle to a given reference speed when the vehicle accelerates under the effect of gravity in a downhill slope to a speed above the ordinary target speed set for the cruise control system.

EP1013521A2 discloses a method for controlling the reference speed of a brake control arrangement of a motor vehicle, which allows the set reference speed to increase on a downhill slope so that the vehicle is allowed to accelerate under the effect of gravity.

### DISCLOSURE OF THE INVENTION

The object of the present invention is to propose a new and advantageous manner of regulating the reference speed of a brake control arrangement of a motor vehicle.

According to the invention, this object is achieved by a method having the features defined in claim 1 and a brake control arrangement having the features defined in claim 5.

When using the invention, the reference speed of a brake control arrangement of a motor vehicle, which is set to a basic value that is adjustable by the driver of the vehicle, is automatically and temporarily increased from the basic value to a modified value when it is established that one or several given conditions are fulfilled so as to thereby allow the vehicle to be accelerated under the effect of gravity in a downhill slope to a speed above the speed corresponding to the basic value. Hereby, the vehicle may under certain conditions accelerate to and temporarily maintain a speed above the speed corresponding to said basic value so as to take additional advantage of the kinetic energy provided "for free" by the acceleration of the vehicle due to gravity in a downhill slope descended by the vehicle. This will create opportunities for improved fuel economy and a higher mean speed of the vehicle. Said increase of the reference speed should be kept so small that it won't jeopardize the driving safety and won't feel inconvenient to the driver, but large enough to be capable of giving a beneficial contribution to the fuel economy and/or mean speed of the vehicle. The increase of the reference speed from the basic value to the modified value suitably corresponds to a speed increase in the order of 1-5 km/h.

According to the invention, the reference speed is increased from the basic value to the modified value when it is established that the following conditions are fulfilled:
- the output torque of the vehicle engine has been decreased to zero,
- the speed of the vehicle was above a given threshold speed when the engine output torque reached zero, and
- the vehicle has accelerated to reach the reference speed or a speed at a given level below the reference speed within a given time limit from the moment when the engine output torque reached zero.

Hereby, it will be possible to achieve a certain delay of the initiation of a braking operation by the brake control arrangement in a situation when the vehicle, for instance due to an acceleration in a previous downhill slope, enters a downhill slope at such a high speed that the vehicle very soon reaches the set reference speed for the brake control arrangement.

According to an embodiment of the invention:
- a braking power value representing the magnitude of the braking power ordered by the brake control arrangement is repeatedly or continuously established during a braking operation controlled by the brake control arrangement;
- the largest braking power value established during an ongoing braking operation is stored in a memory; and
- the reference speed is increased from the basic value to the modified value when it is established that the braking power value has dropped during an ongoing braking operation to a given level below the largest braking power value stored during the ongoing braking operation.

This embodiment is based on the fact that the braking power ordered by the brake control arrangement will be gradually reduced as the declivity of a downhill slope descended by the vehicle is reduced. The fact that the braking power value has dropped during an ongoing braking operation to a given level below the largest braking power value stored during the ongoing braking operation is in this case taken as an indication that the vehicle is approaching the end of a downhill slope, and the speed of the vehicle is then allowed to be boosted to a certain extent by the increase of the reference speed at the presumed end of the downhill slope so as to thereby take additional advantage of the acceleration of the vehicle due to gravity and allow the vehicle to leave the downhill slope rolling at an increased speed somewhat higher than the reference speed. Hereby, the vehicle is allowed to roll a longer distance after the downhill slope before it is necessary to throttle up in order to maintain the vehicle at a desired minimum speed, as compared to the case when the vehicle leaves the downhill slope rolling at the reference speed.

According to an alternative embodiment:
- a declivity value representing the declivity of a downhill slope presently descended by the vehicle is repeatedly or continuously established during a braking operation controlled by the brake control arrangement; and
- the reference speed is increased from the basic value to the modified value when it is established that the declivity value has dropped during an ongoing braking operation below a given threshold value from a value above this threshold value.

The fact that the declivity value has dropped during an ongoing braking operation below a given threshold value is in this case taken as an indication that the vehicle is approaching the end of a downhill slope, and the speed of the vehicle is then allowed to be boosted to a certain extent by the increase of the reference speed at the presumed end of the downhill slope.

According to another alternative embodiment:
- a driving resistance value representing the driving resistance of the vehicle is repeatedly or continuously established during a braking operation controlled by the brake control arrangement; and
- the reference speed is increased from the basic value to the modified value when it is established that the driving resistance value has increased during an ongoing braking operation above a given threshold value from a value below this threshold value. The fact that the driving resistance value has increased during an ongoing braking operation above a given threshold value is in this case taken as an indication that the vehicle is approaching the end of a downhill slope, and the speed of the vehicle is then allowed to be boosted to a certain extent by the increase of the reference speed at the presumed end of the downhill slope.

Further advantageous features of the method and the brake control arrangement according to the invention are indicated in the dependent claims and the following description.

The invention also relates to a computer program having the features defined in claim 18, a computer program product having the features defined in claim 19 and an electronic control unit having the features defined in claim 20.

### BRIEF DESCRIPTION OF THE DRAWINGS

With reference to the appended drawings, a specific description of embodiments of the invention cited as examples follows below. In the drawings:
- Fig 1: is a schematic diagram of a combustion engine with an associated driveline, illustrating an embodiment of a brake control arrangement according to the present invention,
- Fig 2: is a schematic outline diagram of an electronic control unit for implementing a method according to the invention,
- Fig 3: is a flow diagram illustrating a method according to an embodiment of the invention, and
- Fig 4: is a flow diagram illustrating a method according to another embodiment of the invention.

### MODES FOR CARRYING OUT THE INVENTION

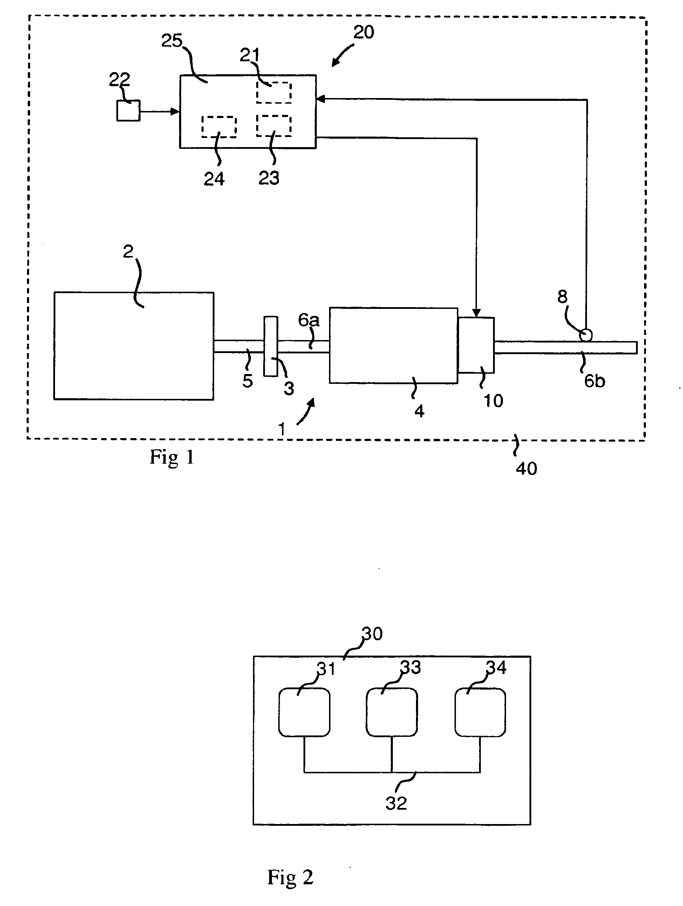

A part of a drive line 1 of a motor vehicle 40 is schematically illustrated in Fig 1. The drive line 1 comprises a vehicle engine 2, for instance in the form of a conventional combustion engine, which is connected to driving wheels (not shown) of the vehicle via a clutch 3 and a gearbox 4. The output shaft 5 of the engine 1 is connected to the input shaft 6a of the gearbox via said clutch 3. which is arranged to transfer the torque exerted by the engine to the input shaft 6a of the gearbox.

The vehicle is provided with a brake control arrangement 20, which comprises brake control means 21 adapted to control the braking power of one or several brakes of the vehicle in dependence on information as to a reference speed S_{ref} and the actual speed of the vehicle so as to automatically endeavour to restrict the speed of the vehicle to the reference speed S_{ref} when the vehicle descends a downhill slope with the brake control arrangement enabled. If the driving resistance of the vehicle is negative, the brake control means 21 will control said brake or brakes so as to strive to restrict the speed of the vehicle to the reference speed S_{ref}. Thus, the brake control means 21 will Increase the braking power when the speed of the vehicle increases above the reference speed S_{ref} and reduce the braking power when the speed of the vehicle falls below the reference speed.

The brake control arrangement 20 further comprises speed setting means 22, by means of which the driver of the vehicle may set the reference speed S_{ref} to a desired basic value V_{bas}. The brake control arrangement 20 further comprises processing means 23 adapted to automatically and temporarily increase the reference speed S_{ref} from the basic value V_{bas} to a modified value V_{mod} when it has established that one or several given conditions are fulfilled so as to thereby allow the vehicle to be accelerated under the effect of gravity in a downhill slope to a speed above the speed corresponding to the basic value V_{bas}.

The brake control means 21 may be implemented by an electronic control unit 25. The processing means 23 may be integrated in one and the same unit 25 as the brake control means 21, as illustrated in Fig 1, but may alternatively be arranged in a separate electronic control unit which is connected to the brake control means 21 so as to send information thereto as to the value of the reference speed S_{ref}.

The brake control means 21 may be adapted to control one or several auxiliary brakes of the vehicle, such as an engine brake and/or an exhaust brake and/or an electromagnetic retarder and/or a hydraulic retarder.

The brake control arrangement 20 may be adapted to operate independently when enabled by the driver, in which case the speed setting means 22 may be configured to allow the driver to directly set the magnitude of the basic value V_{bas} for the reference speed S_{ref}. However, the brake control arrangement 20 may also be adapted to operate under the supervision of a cruise control system which, when enabled by the driver, controls the operation of the vehicle engine 2 so as to endeavour to keep the speed of the vehicle essentially equal to a target speed set by the driver. If the vehicle descends a downhill slope with the cruise control system and the brake control arrangement 20 enabled, i.e. with the cruise control system and the brake control arrangement In operational state, the brake control means 21 will initiate a braking operation so as to endeavour to restrict the speed of the vehicle to the reference speed S_{ref} when the vehicle under the effect of gravity has been accelerated above the target speed and reached the reference speed S_{ref}. When the brake control arrangement 20 operates under the supervision of a cruise control system, the speed setting means 22 may be configured to allow the driver to set the magnitude of the basic value V_{bas} for the reference speed S_{ref} as a desired offset from the target speed for the cruise control system.

The increase of the reference speed S_{ref} from the basic value V_{bas} to the modified value V_{mod} suitably corresponds to a speed increase in the order of 1-5 km/h, which implies that the modified value V_{mod} is to correspond to a vehicle speed which is approximately 1-5 km/h higher than the vehicle speed corresponding to the basic value V_{bas}.

If the driver sets a new basic value V_{bas} for the reference speed S_{ref} in a situation when the reference speed S_{ref} has been Increased above the previously set basic value V_{bas}, the reference speed S_{ref} is to be reset to the new basic value V_{bas}.

When the brake control arrangement 20 operates under the supervision of a cruise control system and the target speed set for the cruise control system by the driver is below a certain speed, for instance about 60 km/h, the reference speed S_{ref} is with advantage restricted to the basic value V_{bas}, which implies that no increase of the reference speed S_{ref} from the basic value V_{bas} to the modified value V_{mod} is allowed in this situation.

In the illustrated example, the brake control means 21 is adapted to control an auxiliary brake 10 in the form of a retarder, which acts on the output shaft 6b of the gearbox 4.

The actual speed of the vehicle, i.e. the prevailing speed at which the vehicle is running, may be measured or estimated in any suitable manner. The speed of the vehicle may for instance be estimated based on measuring values of the rotational speed of some part of the vehicle's drive shaft, such as the output shaft 6b of the gearbox 4. In the example illustrated in Fig 1, the actual vehicle speed Is established by means of a measuring member 8 arranged to generate a value representing the rotational speed of the gearbox output shaft 6b. The brake control arrangement 20 is arranged to receive information from this measuring member 8.

Different alternative examples of conditions for the above-mentioned increase of the reference speed S_{ref} will be described hereinafter.

According to a first alternative:
- a braking power value V_{bp} representing the magnitude of the braking power ordered by the brake control arrangement 20 is repeatedly or continuously established during a braking operation controlled by the brake control arrangement;
- the largest braking power value V_{bp,max} established during an ongoing braking operation is stored in a memory 24 of the brake control arrangement; and
- the processing means 23 is adapted to increase the reference speed S_{ref} from the basic value V_{bas} to the modified value V_{mod} when it is established that the braking power value V_{bp} has dropped during an ongoing braking operation to a given level below the largest braking power value V_{bp,max} stored during the ongoing braking operation.

In this case, the processing means 23 is suitably adapted to increase the reference speed S_{ref} from the basic value V_{bas} to the modified value V_{mod} when it is established that the braking power value V_{bp} has dropped during an ongoing braking operation below a threshold value T_{bp} defined as a function of the largest braking power value V_{bp,max} stored during the ongoing braking operation. This threshold value T_{bp} may for instance constitute a predefined fraction, for instance 50%, of the largest braking power value V_{bp,max} stored during the ongoing braking operation.

According to another alternative:
- a declivity value V_{d} representing the declivity of a downhill slope presently descended by the vehicle is repeatedly or continuously established during a braking operation controlled by the brake control arrangement 20; and
- the processing means 23 is adapted to increase the reference speed S_{ref} from the basic value V_{bas} to the modified value V_{mod} when it is established that the declivity value V_{d} has dropped during an ongoing braking operation below a given threshold value T_{d} from a value above this threshold value.

The declivity value V_{d} may be established based on measuring values from an inclination sensor or by means of a suitable calculation model based on different parameters of the vehicle, such as engine load, engine rotational speed and vehicle speed, in a manner well-known to a person skilled in the art.

According to a further alternative:
- a driving resistance value V_{dr} representing the driving resistance of the vehicle is repeatedly or continuously established during a braking operation controlled by the brake control arrangement 20; and
- the processing means 23 is adapted to increase the reference speed S_{ref} from the basic value V_{bas} to the modified value V_{mod} when it is established that the driving resistance value V_{dr} has increased during an ongoing braking operation above a given threshold value T_{dr} from a value below this threshold value.

The driving resistance value V_{dr} may be established by means of a suitable calculation model based on different parameters of the vehicle, such as engine load, engine rotational speed and vehicle speed, in a manner well-known to a person skilled in the art.

The aim of the conditions according to the above-mentioned alternatives is to allow the reference speed S_{ref} to be increased to a certain extent when the vehicle approaches the end of a downhill slope and are based on the fact that the declivity of a downhill slope normally decreases near the end thereof. Thus, these conditions are used in order to detect that the vehicle is about to reach the end of a downhill slope. When the respective condition is fulfilled, it is presumed that the vehicle is about to reach the end of a downhill slope and the reference speed S_{ref} is increased so as to allow the vehicle to leave the downhill slope at a speed somewhat higher than the speed corresponding to the basic value V_{bas} set by the driver for the reference speed S_{ref}.

After an increase of the reference speed S_{ref} to the modified value V_{mod} at a presumed end of a downhill slope, the processing means 23 may be adapted to:
- reset the reference speed S_{ref} to the basic value V_{bas} when it is established that the vehicle has decelerated to a speed below a given threshold speed Tₛ; and/or
- decrease the reference speed S_{ref} towards the basic value V_{bas} when It Is established that the vehicle has accelerated to a speed above the increased reference speed, i.e. to a speed above the speed corresponding to the modified value V_{mod}.

Said threshold speed Tₛ may for instance be about 2 km/h lower than the speed of the vehicle at the moment when the condition for an increase of the reference speed S_{ref} was fulfilled for the first time during the vehicle's descending of the downhill slope in question.

Said decrease of the reference speed S_{ref} from the modified value V_{mod} towards the basic value V_{bas} is with advantage performed gradually, for instance with steps of a given magnitude at certain time intervals. The magnitude of said steps may for Instance be about 0.1 km/h and the time interval between each step may for instance be about 0.5 seconds. This decrease of the reference speed S_{ref} towards the basic value V_{bas} is interrupted when the reference speed S_{ref} has reached the basic value V_{bas} and may also be interrupted when the vehicle has decelerated to a speed below the above-mentioned threshold speed Tₛ.

According to the invention, the processing means 23 is adapted to increase the reference speed S_{ref} from the basic value V_{bas} to the modified value V_{mod} when it is established that the following conditions are fulfilled:
- the output torque of the vehicle engine 2 has been decreased to zero,
- the speed of the vehicle was above a given threshold speed Tᵥₒ when the engine output torque reached zero, and
- the vehicle has accelerated to reach the reference speed S_{ref} or a speed at a given level below the reference speed within a given time limit Tₜᵢₘₑ from the moment when the engine output torque reached zero.

The aim of the conditions according to the last mentioned alternative is to allow the reference speed S_{ref} to be increased to a certain extent when the vehicle enters a downhill slope at such a high speed that the vehicle very soon reaches a speed corresponding to the basic value V_{bas} set for the reference speed S_{ref}. Hereby, a retardation of the vehicle under the effect of an automatic braking operation initiated by the brake control arrangement 20 is delayed. The time limit Tₜᵢₘₑ may for instance be about 3-10 seconds, suitably about 5 seconds.

Said threshold speed Tᵥ₀ is with advantage defined as a function of the basic value V_{bas} set for the reference speed S_{ref} and is of course to be lower than the speed corresponding to the basic value V_{bas}. When the brake control arrangement 20 operates under the supervision of a cruise control system, the threshold speed Tᵥ₀ is also to be higher than the target speed for the cruise control system, i.e. in this case the threshold speed Tᵥ₀ is to be located between said target speed and the reference speed S_{ref}.

That the vehicle has accelerated to reach the reference speed S_{ref} or a speed at a given level below the reference speed may of course be established based on information as to the prevailing speed of the vehicle. Said given level may for instance be about 0.1-0.5 km/h below the reference speed S_{ref}. That the vehicle has accelerated to reach the reference speed S_{ref} may alternatively be established by detecting that an automatic braking operation has been initiated by the brake control arrangement 20, i.e. that the brake control arrangement has ordered a braking power of a value above zero.

After an increase of the reference speed S_{ref} to the modified value V_{mod} at the beginning of a downhill slope, the processing means 23 is adapted to decrease the reference speed S_{ref} towards the basic value V_{bas} when it is established that the vehicle has reached the increased reference speed, I.e. a speed corresponding to the modified value V_{mod}. This decrease of the reference speed S_{ref} from the modified value V_{mod} towards the basic value V_{bas} is with advantage performed gradualy, for instance with steps of a given magnitude at certain time intervals. The magnitude of said steps may for instance be about 0.1 km/h and the time interval between each step may for instance be about 0.5 seconds. This decrease of the reference speed S_{ref} towards the basic value V_{bas} is interrupted when the reference speed S_{ref} has reached the basic value V_{bas}.

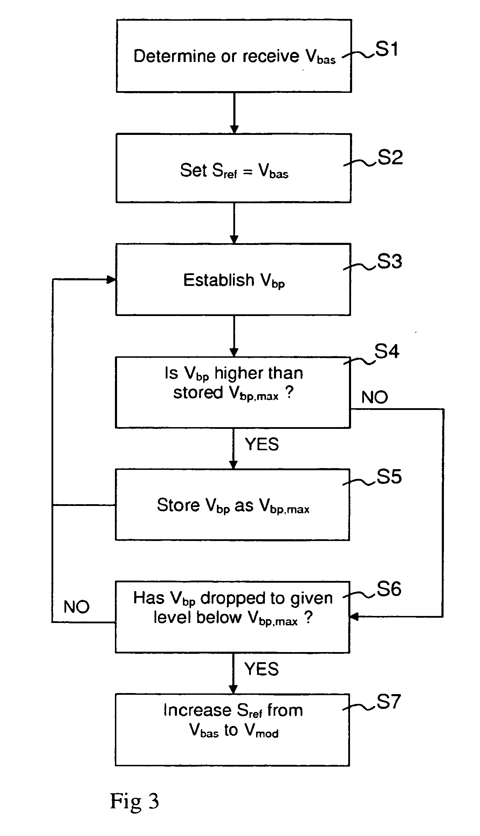

A flow diagram illustrating an embodiment of an inventive method for controlling the reference speed S_{ref} of a brake control arrangement 20 of a motor vehicle is shown in Fig 3. in a first step S1, a basic value V_{bas} for the reference speed S_{ref} is determined or received. In a second step S2, the reference speed S_{ref} is set to the basic value V_{bas}. In a third step S3, a braking power value V_{bp} representing the magnitude of the braking power ordered by the brake control arrangement 20 is established. If this constitutes the first braking power value V_{bp} established during a braking operation initiated by the brake control arrangement 20, this braking power value V_{bp} is stored in a memory 24 as the largest braking power value V_{bp,max} established during the ongoing braking operation, and a new braking power value V_{bp} is established. In a fourth step S4, each new braking power value V_{bp} is compared with the stored braking power value V_{bp,max} representing the largest braking power value established during the ongoing braking operation. If this comparison indicates that the new braking power value V_{bp} is higher than the stored braking power value V_{bp,max}, the new braking power value is stored in the memory 24 as the largest braking power value V_{bp,max} established during the ongoing braking operation and steps S3 and S4 are repeated. If the comparison indicates that the new braking power value V_{bp} is lower than the stored braking power value V_{bp,max}, it is established in step S6 whether or not the new braking power value V_{bp} has dropped to a given level below the stored braking power value V_{bp,max}. If this is the case, the reference speed S_{ref} is increased from the basic value V_{bas} to the modified value V_{mod} in step S7. If this is not the case, steps S3 and S4 are repeated.

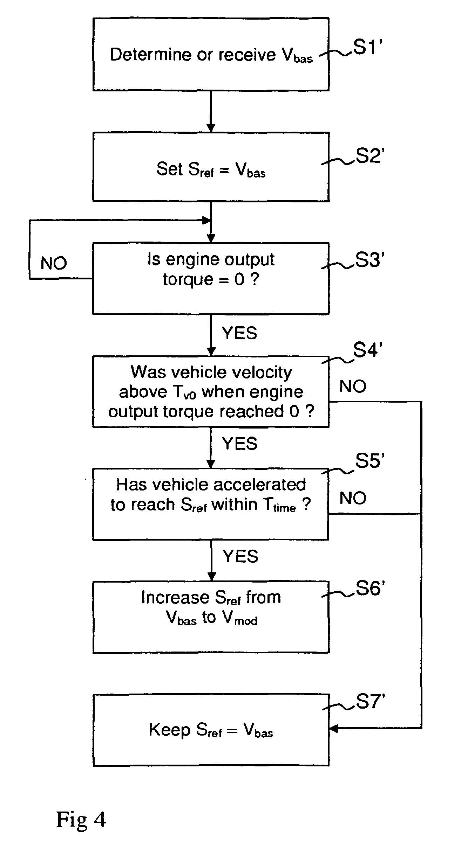

A flow diagram illustrating another embodiment of an inventive method for controlling the reference speed S_{ref} of a brake control arrangement 20 of a motor vehicle is shown in Fig 4. In a first step S1', a basic value V_{bas} for the reference speed S_{ref} is determined or received. In a second step S2', the reference speed S_{ref} is set to the basic value V_{bas}. In a third step S3', it is established whether or not the output torque of the vehicle engine 2 has been decreased to zero. If this is not the case, step S3' is repeated after a certain time interval. If this is the case, it is established in step S4' whether or not the speed of the vehicle was above a given threshold speed Tᵥ₀ when the engine output torque reached zero. If this is not the case, the procedure proceeds to step S7' and the reference speed S_{ref} is kept equal to the basic value V_{bas}. If it is established in step S4' that the speed of the vehicle was above the given threshold speed Tᵥ₀ when the engine output torque reached zero, is established in step S5' whether or not the vehicle has accelerated to reach the reference speed S_{ref}, or alternatively a speed at a given level below the reference speed, within a given time limit Tₜᵢₘₑ from the moment when the engine output torque reached zero. If this is the case, the reference speed S_{ref} Is increased from the basic value V_{bas} to the modified value V_{mod} in step S6'. If this is not the case, the procedure proceeds to step S7' and the reference speed S_{ref} is kept equal to the basic value V_{bas.}

Computer program code for implementing a method according to the invention is suitably included in a computer program, which is loadable into the internal memory of a computer, such as the internal memory of an electronic control unit of a motor vehicle. Such a computer program is suitably provided via a computer program product comprising a data storage medium readable by an electronic control unit, which data storage medium has the computer program stored thereon.

A computer program according to the invention is disclosed in claim 6.

Fig 2 very schematically illustrates an electronic control unit 30 comprising an execution means 31, such as a central processing unit (CPU), for executing computer software. The execution means 31 communicates with a memory 33, for instance of the type RAM, via a data bus 32. The control unit 30 also comprises data storage medium 34, for instance in the form of a hard disc, a Flash memory or a memory of the type ROM, PROM, EPROM or EEPROM. The execution means 31 communicates with the data storage medium 34 via the data bus 32. A computer program comprising computer program code for implementing a method according to the invention is stored on the data storage medium 34.

## Claims

1. A method for controlling the reference speed of a brake control arrangement (20) of a motor vehicle, wherein the brake control arrangement is adapted to automatically control one or several brakes of the vehicle so as to endeavour to restrict the speed of the vehicle to the reference speed when the vehicle descends a downhill slope, the reference speed being set to a basic value that is adjustable by the driver of the vehicle, whereby the reference speed is automatically and temporarily increased from the basic value to a modified value when it is established that one or several given conditions are fulfilled so as to thereby allow the vehicle to be accelerated under the effect of gravity in a downhill slope to a speed above the speed corresponding to the basic value, **characterized in that** the reference speed **is** increased from the basic value to the modified value when it is established that the following conditions are fulfilled:
- the output torque of the vehicle engine (2) has been decreased to zro,
- the speed of the vehicle was above a given threshold speed when the engine output torque reached zero, and
- the vehicle has accelerated to reach the reference speed or a speed at a given level below the reference speed within a given time limit from the moment when the engine output torque reached zero.

2. A method according to claim 1, **characterized in that** the reference speed, after an increase thereof to the modified value, is decreased towards the basic value when it is established that the vehicle has reached the increased reference speed.

3. A method according to claim 1 or 2, **characterized in that** said decrease of the reference speed from the modified value towards the basic value is performed gradually.

4. A method according to any of claims 1-3, **characterized in that** the increase of the reference speed from the basic value to the modified value corresponds to a speed Increase In the order of 1-5 km/h.

5. A brake control arrangement for a motor vehicle, wherein the brake control arrangement (20) comprises:
- brake control means (21) adapted to control one or several brakes of the vehicle in dependence on information as to a reference speed and the actual speed of the vehicle so as to endeavour to restrict the speed of the vehicle to the reference speed when the vehicle descends a downhill slope; and
- speed setting means (22), by means of which the driver of the vehicle may set the reference speed to a desired basic value; and
- processing means (23) adapted to automatically and temporarily increase the reference speed from the basic value to a modified value when it has established that one or several given conditions are fulfilled so as to thereby allow the vehicle to be accelerated under the effect of gravity in a downhill slope to a speed above the speed corresponding to the basic value
**characterized in that** the processing means (23) is adapted to increase the reference speed from the basic value to the modified value when it has established that the following conditions are fulfilled:
- the output torque of the vehicle engine has been decreased to zero,
- the speed of the vehicle was above a given threshold speed when the engine output torque reached zero, and
- the vehicle has accelerated to reach the reference speed or a speed at a given level below the reference speed within a given time limit from the moment when the engine output torque reached zero.

6. A computer program loadable into the internal memory of a computer In a motor vehicle, the computer program comprising computer program code for causing the computer:
- to determine or receive a basic value for a reference speed;
- to determine or receive a value representing the actual speed of the vehicle;
- to control one or several brakes of the vehicle in dependence on the reference speed and the actual speed of the vehicle so as to endeavour to restrict the speed of the vehicle to the reference speed; and
- to automatically and temporarily increase the reference speed from the basic value to a modified value when it is established that the following conditions are fulfilled so as to thereby allow the vehicle to be accelerated under the effect of gravity in a downhill slope to a speed above the speed corresponding to the basic value:
• the output torque of the vehicle engine (2) has been decreased to zero,
• the speed of the vehicle was above a given threshold speed when the engine output torque reached zero, and
• the vehicle has accelerated to reach the reference speed or a speed at a given level below the reference speed within a given time limit from the moment when the engine output torque reached zero.

7. A computer program product comprising a data storage medium readable by an electronic control unit (30), a computer program according to claim 6 being stored on said data storage medium.

8. An electronic control unit (30) comprising an execution means (31), a memory (33) connected to the execution means and a data storage medium (34) connected to the execution means, wherein a computer program according to claim 6 is stored on said data storage medium (34).

## Patentansprüche

1. Verfahren zum Steuern der Bezugsgeschwindigkeit einer Bremssteueranordnung (20) eines Kraftfahrzeugs, wobei die Bremssteueranordnung dazu eingerichtet ist, automatisch eine oder mehrere Bremsen des Fahrzeugs derart zu steuern, dass eine Begrenzung der Geschwindigkeit des Fahrzeugs auf die Bezugsgeschwindigkeit angestrebt wird, wenn das Fahrzeug ein Gefälle hinab fährt, wobei die Bezugsgeschwindigkeit auf einen Basiswert eingestellt ist, der durch den Fahrer des Fahrzeugs anpassbar ist, wobei die Bezugsgeschwindigkeit automatisch und temporär von dem Basiswert auf einen modifizierten Wert erhöht wird, wenn festgestellt wird, dass eine oder mehrere gegebene Bedingungen erfüllt sind, um dadurch eine Beschleunigung des Fahrzeugs unter Wirkung der Schwerkraft bei einem Gefälle auf eine Geschwindigkeit oberhalb der dem Basiswert entsprechenden Geschwindigkeit zu ermöglichen, **dadurch gekennzeichnet, dass** die Bezugsgeschwindigkeit vom Basiswert auf den modifizierten Wert erhöht wird, wenn festgestellt wird, dass die folgenden Bedingungen erfüllt sind:
- das Ausgangsmoment des Fahrzeugmotors (2) wurde auf Null reduziert,
- die Geschwindigkeit des Fahrzeugs lag oberhalb einer gegebenen Schwellengeschwindigkeit, als das Motorausgangsmoment Null erreicht hat, und
- das Fahrzeug wurde bis zu einem Erreichen der Bezugsgeschwindigkeit oder einer Geschwindigkeit auf einem gegebenen Niveau unterhalb der Bezugsgeschwindigkeit innerhalb einer gegebenen Zeitbegrenzung von dem Zeitpunkt an beschleunigt, in dem das Motorausgangsmoment Null erreicht hat.

2. Verfahren nach Anspruch 1,
**dadurch gekennzeichnet, dass** die Bezugsgeschwindigkeit nach einem Erhöhen von dieser auf den modifizierten Wert auf den Basiswert reduziert wird, wenn festgestellt wird, dass das Fahrzeug die erhöhte Bezugsgeschwindigkeit erreicht hat.

3. Verfahren nach Anspruch 1 oder 2,
**dadurch gekennzeichnet, dass** das Reduzieren der Bezugsgeschwindigkeit vom modifizierten Wert auf den Basiswert graduell durchgeführt wird.

4. Verfahren nach einem der Ansprüche 1 bis 3,
**dadurch gekennzeichnet, dass** das Erhöhen der Bezugsgeschwindigkeit von dem Basiswert auf den modifizierten Wert einer Geschwindigkeitserhöhung in der Größnordnung von 1-5 km/h entspricht.

5. Bremssteueranordnung (20) für ein Kraftfahrzeug umfassend:
- Bremssteuermittel (21), die dazu eingerichtet sind, automatisch eine oder mehrere Bremsen des Fahrzeugs in Abhängigkeit von Informationen bezüglich einer Bezugsgeschwindigkeit und einer tatsächlichen Geschwindigkeit des Fahrzeugs derart zu steuern, dass eine Begrenzung der Geschwindigkeit des Fahrzeugs auf die Bezugsgeschwindigkeit angestrebt wird, wenn das Fahrzeug ein Gefälle hinab fährt; und
- Geschwindigkeitseinstellmittel (22), mittels derer der Fahrer des Fahrzeugs die Bezugsgeschwindigkeit auf einen gewünschten Basiswert einstellen kann; und
- Verarbeitungsmittel (23), die dazu eingerichtet sind, die Bezugsgeschwindigkeit automatisch und temporär von dem Basiswert auf einen modifizierten Wert zu erhöhen, wenn festgestellt wurde, dass eine oder mehrere gegebene Bedingungen erfüllt sind, um dadurch eine Beschleunigung des Fahrzeugs unter Wirkung der Schwerkraft bei einem Gefälle auf eine Geschwindigkeit oberhalb der dem Basiswert entsprechenden Geschwindigkeit zu ermöglichen,
**dadurch gekennzeichnet, dass** die Verarbeitungsmittel (23) dazu eingerichtet sind, die Bezugsgeschwindigkeit vom Basiswert auf den modifizierten Wert zu erhöhen, wenn festgestellt wurde, dass die folgenden Bedingungen erfüllt sind:
- das Ausgangsmoment des Fahrzeugmotors (2) wurde auf Null reduziert,
- die Geschwindigkeit des Fahrzeugs lag oberhalb einer gegebenen Schwellengeschwindigkeit, als das Motorausgangsmoment Null erreicht hat, und
- das Fahrzeug wurde bis zu einem Erreichen der Bezugsgeschwindigkeit oder einer Geschwindigkeit auf einem gegebenen Niveau unterhalb der Bezugsgeschwindigkeit innerhalb einer gegebenen Zeitbegrenzung von dem Zeitpunkt an beschleunigt, in dem das Motorausgangsmoment Null erreicht hat.

6. Computerprogramm, das in einen internen Speicher eines Computers in einem Kraftfahrzeug ladbar ist, wobei das Computerprogramm Programmcode umfasst, um den Computer zu veranlassen:
- einen Basiswert für eine Bezugsgeschwindigkeit zu ermitteln oder zu erhalten;
- einen die tatsächliche Geschwindigkeit des Fahrzeugs darstellenden Wert zu ermitteln oder zu erhalten;
- eine oder mehrere Bremsen des Fahrzeugs in Abhängigkeit der Bezugsgeschwindigkeit und der tatsächlichen Geschwindigkeit derart zu steuern, dass eine Begrenzung der Geschwindigkeit des Fahrzeugs auf die Bezugsgeschwindigkeit angestrebt wird; und
- die Bezugsgeschwindigkeit automatisch und temporär von dem Basiswert auf einen modifizierten Wert zu erhöhen, wenn festgestellt wird, dass die folgenden Bedingungen erfüllt sind, um dadurch eine Beschleunigung des Fahrzeugs unter Wirkung der Schwerkraft bei einem Gefälle auf eine Geschwindigkeit oberhalb der dem Basiswert entsprechenden Geschwindigkeit zu ermöglichen:
• das Ausgangsmoment des Fahrzeugmotors (2) wurde auf Null reduziert,
• die Geschwindigkeit des Fahrzeugs lag oberhalb einer gegebenen Schwellengeschwindigkeit, als das Motorausgangsmoment Null erreicht hat, und
• das Fahrzeug wurde bis zu einem Erreichen der Bezugsgeschwindigkeit oder einer Geschwindigkeit auf einem gegebenen Niveau unterhalb der Bezugsgeschwindigkeit innerhalb einer gegebenen Zeitbegrenzung von dem Zeitpunkt an beschleunigt, in dem das Motorausgangsmoment Null erreicht.

7. Computerprogrammprodukt, umfassend ein von einer elektronischen Steuereinheit (30) lesbares Datenspeichermedium, wobei ein Computerprogramm nach Anspruch 6 auf dem Datenspeichermedium gespeichert ist.

8. Elektronische Steuereinheit (30), umfassend ein Ausführmittel (31), einen mit dem Ausführmittel verbundenen Speicher (33) und ein mit dem Ausführmittel verbundenes Datenspeichermedium (34), wobei ein Computerprogramm nach Anspruch 6 auf dem Datenspeichermedium (34) gespeichert ist.

## Revendications

1. Procédé pour commander la vitesse de référence d'un dispositif de commande de frein (20) d'un véhicule automobile, dans lequel le dispositif de commande de frein est apte à commander automatiquement un ou plusieurs freins du véhicule de manière à tenter de limiter la vitesse du véhicule à la vitesse de référence lorsque le véhicule descend une pente, la vitesse de référence étant fixée à une valeur de base qui peut être réglée par le conducteur du véhicule, la vitesse de référence étant automatiquement et temporairement augmentée, de la valeur de base à une valeur modifiée, lorsqu'il est établi qu'une ou plusieurs conditions données est ou sont remplie(s), de manière à permettre au véhicule d'être accéléré sous l'effet de la gravité dans une pente jusqu'à une vitesse supérieure à la vitesse correspondant à la valeur de base, **caractérisé en ce que** la vitesse de référence est augmentée, de la valeur de base à la valeur modifiée, lorsqu'il est établi que les conditions suivantes sont remplies :
- le couple de sortie du moteur (2) du véhicule a été réduit à zéro,
- la vitesse du véhicule était supérieure à une vitesse seuil donnée lorsque le couple de sortie du moteur a atteint zéro, et
- le véhicule a accéléré pour atteindre la vitesse de référence ou une vitesse d'un niveau donné inférieur à la vitesse de référence dans une limite de temps donnée à partir du moment où le couple de sortie du moteur a atteint zéro.

2. Procédé selon la revendication 1, **caractérisé en ce que** la vitesse de référence, après une augmentation menant à la valeur modifiée, est diminuée en direction de la valeur de base lorsqu'il est établi que le véhicule a atteint la vitesse de référence augmentée.

3. Procédé selon la revendication 1 ou 2, **caractérisé en ce que** ladite diminution de la vitesse de référence, de la valeur modifiée en direction de la valeur de base, est exécutée progressivement.

4. Procédé selon une quelconque des revendications 1 à 3, **caractérisé en ce que** l'augmentation de la vitesse de référence, de la valeur de base à la valeur modifiée, correspond à une augmentation de vitesse de l'ordre de 1 à 5 km/h.

5. Dispositif de commande de frein pour un véhicule automobile, le dispositif de commande de frein (20) comprenant :
- des moyens de commande de frein (21) aptes à commander un ou plusieurs freins du véhicule en fonction d'une information relative à une vitesse de référence et à la vitesse réelle du véhicule de manière à tenter de limiter la vitesse du véhicule à la vitesse de référence lorsque le véhicule descend une pente ; et
- des moyens de fixation de la vitesse (22) au moyen desquels le conducteur du véhicule peut fixer la vitesse de référence à une valeur de base désirée ; et
- des moyens de traitement (23) aptes à augmenter automatiquement et temporairement la vitesse de référence, de la valeur de base à une valeur modifiée, lorsqu'ils ont établi qu'une ou plusieurs conditions donnée(s) est ou sont remplies, de manière à permettre par ce moyen au véhicule d'être accéléré sous l'effet de la gravité dans une pente jusqu'à une vitesse supérieure à la vitesse qui correspond à la vitesse de base,
**caractérisé en ce que** les moyens de traitement (23) sont à aptes à augmenter la vitesse de référence de la valeur de base à la valeur modifiée lorsqu'ils ont établi que les conditions suivantes sont remplies :
- le couple de sortie du moteur du véhicule a été réduit à zéro,
- la vitesse du véhicule était supérieure à une vitesse seuil donnée lorsque le couple de sortie du moteur a atteint zéro, et
- le véhicule a accéléré pour atteindre une vitesse de référence ou une vitesse d'un niveau donné au-dessous de la vitesse de référence dans une limite de temps donnée à partir du moment où le couple de sortie du moteur a atteint zéro.

6. Programme d'ordinateur pouvant être chargé dans une mémoire interne d'un ordinateur à bord d'un véhicule automobile, le programme d'ordinateur comprenant un code de programme d'ordinateur sous l'effet duquel l'ordinateur :
- détermine ou reçoit une valeur de base pour une vitesse de référence ;
- détermine ou reçoit une valeur représentant la vitesse réelle du véhicule ;
- commande un ou plusieurs freins du véhicule en fonction de la vitesse de référence et de la vitesse réelle du véhicule de manière à tenter de limiter la vitesse du véhicule à la vitesse de référence ; et
- augmente automatiquement et temporairement la vitesse de référence, de la valeur de base à une valeur modifiée, lorsqu'il est établi que les conditions suivantes sont remplies, de manière à permettre au véhicule d'être accéléré sous l'effet de la gravité dans une pente, jusqu'à une vitesse supérieure à la vitesse correspondant à la valeur de base ;
• le couple de sortie du moteur (2) du véhicule a été réduit à zéro,
• la vitesse du véhicule était supérieure à une vitesse seuil donnée au moment où le couple de sortie du moteur a atteint zéro, et
• le véhicule a accéléré pour atteindre la vitesse de référence ou une vitesse d'un niveau donné au-dessous de la vitesse de référence dans une limite de temps donnée à partir du moment où le couple de sortie du moteur a atteint zéro.

7. Produit programme d'ordinateur comprenant un support de stockage de données lisible par une unité de commande électronique (30), un programme d'ordinateur selon la revendication 6 étant stocké sur ledit support de stockage de données.

8. Unité de commande électronique (30) comprenant un moyen d'exécution (31), une mémoire (33) connectée au moyen d'exécution et un support de stockage de données (34) connecté au moyen d'exécution, dans laquelle un programme d'ordinateur selon la revendication 6 est stocké sur ledit support de stockage de données (34).
